# EUROPEAN PATENT SPECIFICATION

(11) **EP 2 659 643 B1**
(45) Date of publication and mention of the grant of the patent: **20.04.2016**
(21) Application number: 10809253.7
(22) Date of filing: 29.12.2010
(51) Int. Cl.: H04L 29/06, H04L 9/18

(54) **METHOD AND APPARATUS FOR DYNAMICALLY SWITCHING A SECURITY DEVICE BETWEEN ON-DEMAND AND IN-ADVANCE OPERATION**
VERFAHREN UND VORRICHTUNG ZUM DYNAMISCHEN SCHALTEN EINER SICHERHEITSVORRICHTUNG ZWISCHEN ON-DEMAND- UND IN-ADVANCE-BETRIEB
PROCÉDÉ ET APPAREIL POUR LA COMMUTATION DYNAMIQUE D'UN DISPOSITIF DE SÉCURITÉ ENTRE UNE OPÉRATION RÉALISÉE À LA DEMANDE ET UNE OPÉRATION RÉALISÉE À L'AVANCE

(43) Date of publication of application: 06.11.2013
(73) Proprietor: Motorola Solutions, Inc., Schaumburg, IL 60196 (US)
(72) Inventor: LISIK, Dariusz J., PL-30-348 Kraków (PL); SCHNABEL, Christian, 13591 Berlin (DE); WAKSMANSKI, Lukasz, PL-30-415 Kraków (PL)
(74) Representative: Treleven, Colin
(86) International application number: PCT/PL2010/000127
(87) International publication number: WO 2012/091577

(56) References cited:
- US-A1- 2008 065 902
- US-B1- 7 606 364

## Description

### TECHNICAL FIELD

The present disclosure relates generally to a security device, and in particular to a method and apparatus for dynamically switching a security device between on-demand and in-advance operation.

### BACKGROUND

A security device is often used in communication devices, such as two-way radios and cell phones, to provide security features for the communication devices. The security features often include data encryption, data decryption, and keystream segment generation. As used herein, a keystream is a cryptographic term, and means a stream of random or pseudorandom bits or bytes that are combined with a message (such as voice data) to produce an encrypted message. Usually, the keystream is combined with the message by a logical operation, such as addition, subtraction, or exclusive OR. A keystream comprises a plurality of segments, i.e., keystream segments, and each keystream segment is generated separately by a security device, such as a Subscriber Identity Module (SIM) card.

US-B1-7606364 (Shih) provides a cipher engine for performing cipher processing, i.e. encrypting and decrypting. The processing is carried out on logical data streams in a physical data stream on a storage device. The cipher engine can switch from cipher processing a first logical data stream to a second logical data stream, when a command for the second logical data stream is received. When the switch occurs, cipher information of the first logical data stream is stored in a cipher state memory. The cipher engine can later resume cipher processing of the first logical data stream, using the stored cipher information of the first logical data stream. A virtually unlimited number of logical data streams can be supported, and duplicate hardware is avoided.

A problem exists when the security device is not capable of generating a keystream segment and encrypting or decrypting data concurrently or simultaneously. In this case, when both a keystream segment generation request and a data processing request is received during the same time period, an undesirable delay in processing any time sensitive media, such as voice, occurs.

Accordingly, there is a need for a method and apparatus that enables a security device to provide keystream segments while the security device is encrypting or decrypting data, and support data encryption or decryption while the security device is providing keystream segments.

### BRIEF DESCRIPTION OF THE FIGURES

The accompanying figures, where like reference numerals refer to identical or functionally similar elements throughout the separate views, together with the detailed description below, are incorporated and form part of the specification and serve to further illustrate various embodiments of concepts that include the claimed invention, and to explain various principles and advantages of those embodiments.
FIG. 1 illustrates a system implementing embodiments of the present teachings.
FIG. 2 is a logical timeline flowchart illustrating a prior art method.
FIG. 3 is a logical flowchart illustrating a method in accordance with some embodiments of the present teachings.
FIG. 4 illustrates a logical timeline flowchart illustrating a method and apparatus in accordance with some embodiments of the present teachings.

Skilled artisans will appreciate that elements in the figures are illustrated for simplicity and clarity and have not necessarily been drawn to scale. For example, the dimensions of some of the elements in the figures may be exaggerated relative other elements to help improve understanding of various embodiments. In addition, the description and drawings do not necessarily require the order illustrated. It will be further appreciated that certain actions and/or steps may be described or depicted in a particular order of occurrence while those skilled in the art will understand that such specificity with respect to sequence is not actually required.

Apparatus and method components have been represented where appropriate by conventional symbols in the drawings, showing only those specific details that are pertinent to understanding the various embodiments so as not to obscure the disclosure with details that will be readily apparent to those of ordinary skill in the art having the benefit of the description herein. Thus, it will be appreciated that for simplicity and clarity of illustration, common and well-understood elements that are useful or necessary in a commercially feasible embodiment may not be depicted in order to facilitate a less obstructed view of these various embodiments.

### DETAILED DESCRIPTION

Generally speaking, pursuant to the various embodiments, the present disclosure provides a method and apparatus for dynamically switching a security device between on-demand and in-advance operation. As used herein, on-demand means that the security device performs an operation in response to a request by another device, such as a processing device. For example, the security device generates a keystream segment (KSS) when the processing device requests for a keystream segment from the security device. This generated keystream segment is termed herein an on-demand keystream segment, and the security device is said to generate the keystream segment on-demand. To the contrary, in-advance means that the security device performs an operation without request for such operation from the processing device. For example, the security device generates a plurality of keystream segments without request for the keystream segments from the processing device. The plurality of keystream segments are termed herein in-advance keystream segments, and the security device is said to generate the plurality of keystream segments in-advance.

In accordance with the present teachings, a method performed by a security device (for example, a SIM card) for dynamically switching the security device between on-demand and in-advance operation includes generating a first set of keystream segments on-demand for a processing device for voice encryption, and, while generating the first set of keystream segments, receiving a request from the processing device to encrypt or decrypt a block of data. As used herein, a set means one or more. The method further includes generating a second set of keystream segments in-advance for storing in a buffer in response to the request for data encryption or decryption from the processing device. The method also includes ceasing keystream segments generation and proceeding or beginning to encrypt or decrypt the block of data during a time when the second set of keystream segments stored in the buffer is being used by the processing device for voice encryption. In addition, the method includes returning to generate at least one keystream segment on-demand for the processing device after completion of encryption or decryption of the block of data.

Further in accordance with the present teachings, a system for dynamically switching a security device between on-demand and in-advance operation includes a processing device that is coupled to a security device. The security device generates keystream segments and encrypts or decrypts data. However, the security device cannot concurrently or simultaneously generate keystream segments and encrypt or decrypt data. The processing device receives, one at a time from the security device, each keystream segment in a first set of keystream segments for encrypting voice. In addition, the processing device sends a request to the security device to encrypt or decrypt a block of data.

The security device generates the first set of keystream segments on-demand for the processing device, and while generating the first set of keystream segments, receives the request from the processing device to encrypt or decrypt the block of data. In response to the request to encrypt or decrypt the block of data, the security device, generates a second set of keystream segments in-advance, and stores the second set of keystream segments in a buffer. When the second set of key stream segments stored in the buffer is being used by the processing device for encrypting voice, the security device ceases generation of the second set of keystream segments, and then encrypts or decrypts the block of data. After the block of data is encrypted or decrypted, the security device returns to generate at least one keystream segment on-demand for the processing device. Those skilled in the art will realize that the above recognized advantages and other advantages described herein are merely illustrative and are not meant to be a complete rendering of all of the advantages of the various embodiments of the present disclosure.

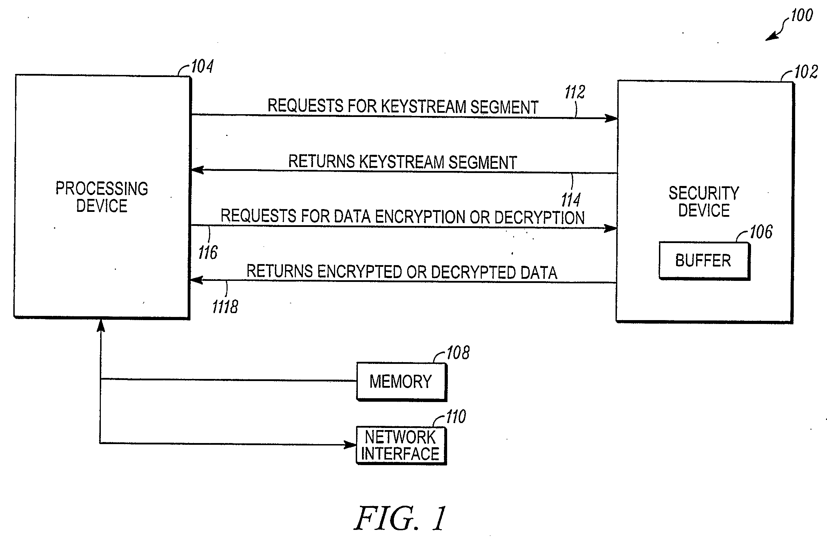

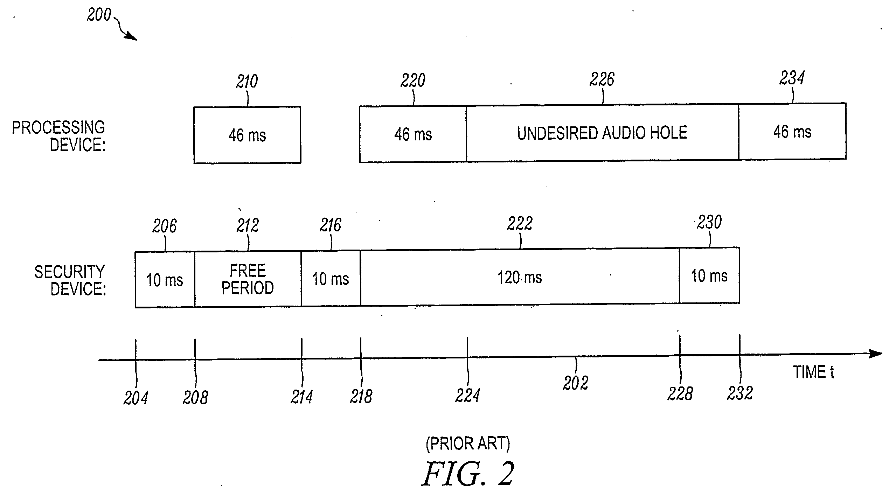

Referring now to the drawings, and in particular FIG. 1, an illustrative system implementing embodiments in accordance with the present teachings is shown and indicated generally at 100. System 100 supports secure voice communication, such as group calls. As used herein, secure voice communication means that the voice data is encrypted using keystream segments. System 100 comprises a processing device 104 coupled to a security device 102. The processing device 104 is coupled to a memory 108 and a network interface 110, which enables the processing device 104 to communicate with other devices and systems. The processing device 104, memory 108 and network interface 110 are operatively coupled, and when programmed form the means for these elements to implement their desired functionality, for example, as illustrated by reference to the methods shown in figures 2-4. Likewise, although not shown, the security device 102 includes a processing device and memory that are operatively coupled and which when programmed form the means for these elements to implement their desired functionality, for example, as illustrated by reference to the methods shown in figures 2-4.

The network interface can be used for signaling or transmitting (e.g., packets, datagrams, frames, superframes, or any other information blocks) over a wireless interface. The network interface 110 comprises elements including processing, modulating, and transceiver elements that are operable in accordance with any one or more standard or proprietary wireless interfaces, wherein some of the functionality of the processing, modulating, and transceiver elements may be performed by means of the processing device 104 through programmed logic such as software applications or firmware stored on the memory device of the system element or through hardware.

The processing device 104 (and that included in the security device 102) may be programmed with software or firmware logic or code for performing functionality described by reference to figures 2-4; and/or the processing device may be implemented in hardware, for example, as a state machine or ASIC (application specific integrated circuit). The memory implemented by these system elements can include short-term and/or long-term storage of various information needed for the functioning of the respective elements. The memory may further store software or firmware for programming the processing devices with the logic or code needed to perform its functionality.

The security device 102 is adapted to receive requests from the processing device, generate keystream segments, and encrypt or decrypt data. For example, at 116, the processing device 104 requests the security device 102 to encrypt or decrypt a block of data. In response to the request, the security device 102 encrypts or decrypts the block of data, and returns the encrypted or decrypted block of data to the processing device 104 at 118. Another example, at 112, the processing device 104 requests for a keystream segment from the security device. In response to the request, the security device 102 generates a keystream segment, and returns the generated keystream segment to the processing device 104 at 114. Alternatively, at 112, the processing device 104 may request more than one keystream segment from the security device 102. In this scenario, the security device 102 generates the requested number of keystream segments, and at 114 returns the generated keystream segments to the processing device 104. The generation of a keystream segment in response to the request at 112 is an on-demand operation by the security device 102.

The security device 102 also supports an in-advance generation of keystream segments. For example, if the processing device 104 requests the security device 102 to encrypt or decrypt a block of data when the security device 102 is busy with generating a keystream segment, the security device 102 first completes the generation of the requested keystream segment. The security device 102 then generates a second set of keystream segments in-advance, and places the second set of keystream segments into a buffer 106. Thereafter, responsive to the request to encrypt or decrypt the block of data, the security device 102 encrypts or decrypts the block of data for the processing device 104. The processing device 104 uses keystream segments stored in the buffer 106 for voice encryption when the security device 102 is encrypting or decrypting the block of data for the processing device 104. Alternate embodiments of the present teachings may implement the buffer 106 in different ways. For example, the buffer 106 may be implemented as a region of memory in the security device 102, and is controlled by a software driver running on a microcontroller.

One embodiment of system 100 of FIG. 1 is a Terrestrial Trunked Radio (TETRA) compliant subscriber radio which uses a SIM card for security features, wherein TETRA is a European Telecommunications Standards Institute (ETSI) standard first published in 1995. However, the specifics of this illustrative example are not specifics of the disclosure itself, and the teachings set forth herein are applicable in a variety of alternative settings. For example, the disclosure is not limited to the security device being a SIM card but can be any security device that cannot readily perform keystream segment generation and data processing simultaneously or concurrently. In addition, the embodiments can be applied to other devices besides radios such as mobile phones, mobile data terminals, Personal Digital Assistants (PDAs), laptops, two-way radios, cell phones, etc. Oftentimes, a TETRA subscriber radio needs to support Short Data System (SDS) services, such as GPS (Global Positioning System) position, text messages, and the like. In addition, it is not desirable that voice communication, such as group calls or Half-duplex Private Calls (HDPC), over the TETRA subscriber radios be interrupted by SDS services.

Generation of a keystream segment consumes less time of a security device (for example, a SIM card) than encryption or decryption of a block of data. For example, in a TETRA subscriber radio, a SIM card takes about 10 ms (millisecond) to generate a keystream segment, while the SIM card takes about 120 ms to encrypt a SDS message. Alternate embodiments may have different time of keystream segment generation, data encryption, and/or data decryption. It should be noted that the TETRA subscriber radio needs one keystream segment to encrypt each TETRA frame of voice data, such as group calls or HDPC. Since the TETRA subscriber radio uses about 46 ms to encrypt a TETRA frame of voice data, an undesired audio hole is created for the TETRA subscriber when the SIM card is encrypting data and the TETRA subscriber radio needs a keystream segment from the SIM card for voice encryption. As used herein, an audio hole means a delay in time between two consecutive TETRA frames. Thus, when an audio hole happens to a TETRA subscriber's voice in a group call, the listeners of the TETRA subscriber will experience broken voice. The audio hole is further illustrated by reference to FIG. 2.

Turning to FIG. 2, a logical timeline flowchart 200 illustrating a prior art method is shown. Timeline 202 represents time. At time 204, a processing device in a TETRA subscriber radio requests a security device (e.g., the SIM card of the radio) to generate a keystream segment, i.e., an on-demand keystream segment. The security device uses a 10 ms period 206 to generate the keystream segment, and returns the keystream segment to the processing device at time 208. From time 208, the processing device uses a 46 ms period 210 to encrypt voice data, e.g., a TETRA frame of the particular embodiment. Starting from time 208, the security device enters into a 46 ms free period 212, during which the security device does not generate keystream segments. It should be noted that the free period 212 is about 46 ms long, and is thus not big enough for the security device to encrypt or decrypt a block of data, which takes about 120 ms. After the processing device finishes voice encryption at time 214, the processing device requests the security device to generate a second keystream segment. From time 214, the security devices uses a 10 ms period 216 to generate the second keystream segment, and returns the second keystream segment to the processing device at 218. From time 218, the processing device uses the second keystream segment to encrypt a second TETRA frame during a 46 ms period 220.

At time 218, the security device determines that it has received a request from the processing device for encrypting a block of data, such as GPS position data. From time 218, the security device uses a 120 ms period 222 to encrypt the block of data. Before the security device completes the data encryption at time 228, the processing device completes encryption of the second TETRA frame, and requests for a third keystream segment at time 224. However, at time 224, the security device is still busy with encrypting the block of data, and cannot generate the third keystream segment at time 224. In addition, the processing device has to wait for the security device to generate the third keystream segment during a 10 ms period 230 which starts at time 228 and ends at time 232. Accordingly, during an 84 ms period 226 between time 224 and time 232, the processing device has no keystream segment to encrypt voice data, and has to wait for generation of the third keystream segment by the security device during the period 230 in order to next encrypt voice data during a 46ms time period 234. The period 226 is an undesired audio hole because the voice communication operated on by the processing device is interrupted for about 84 ms.

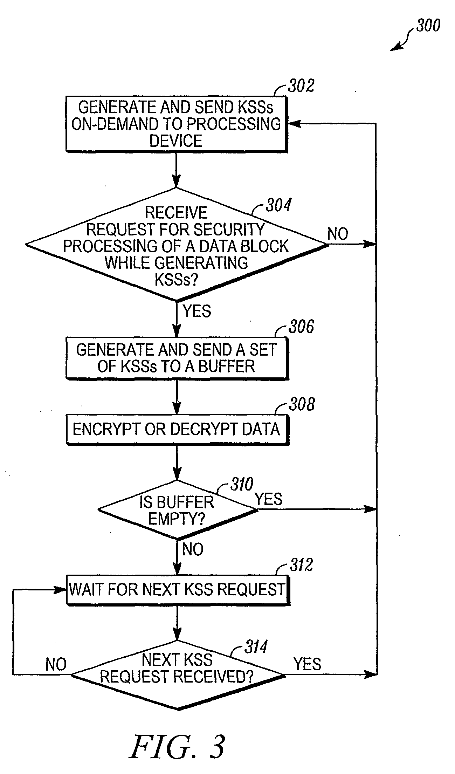

Referring now to FIG. 3, a logical flowchart illustrating a method 300 performed by a security device in accordance with some embodiments of the present teachings is shown. At 302, the security device generates an on-demand keystream segment and returns the keystream segment to the processing device. At 304, the security device determines whether it received a request for encrypting or decrypting (i.e., security processing) a block of data from the processing device while the security device was generating the on-demand keystream segment. If the security device did not receive such a request, the security device continues to generate an on-demand keystream segment whenever the processing device requests a keystream segment at 302. Otherwise, if the security device did receive a request, at 304, for security processing of a data block while generating the keystream segments, the security device generates a set of keystream segments at 306, and stores the set of keystream segments into a buffer (such as the buffer 106 of FIG. 1). At 308, the security device encrypts or decrypts the block of data for the processing device.

At 310, the security device checks whether the buffer is empty. If the buffer is empty, the security device continues to generate an on-demand keystream segment whenever the processing device requests a keystream segment at 302. If the buffer is not empty at 310, the security device waits for a next request for a keystream segment at 312. At 314, the security device determines whether the next keystream segment request has been received. If the next keystream segment request has been received, execution of method 300 transitions to 302. Otherwise, execution of method 300 transitions to 312. Alternatively, if the security device determines that the next keystream segment request has been received at 314, the security device retrieves a keystream segment from the buffer, and sends the keystream segment to the processing device.

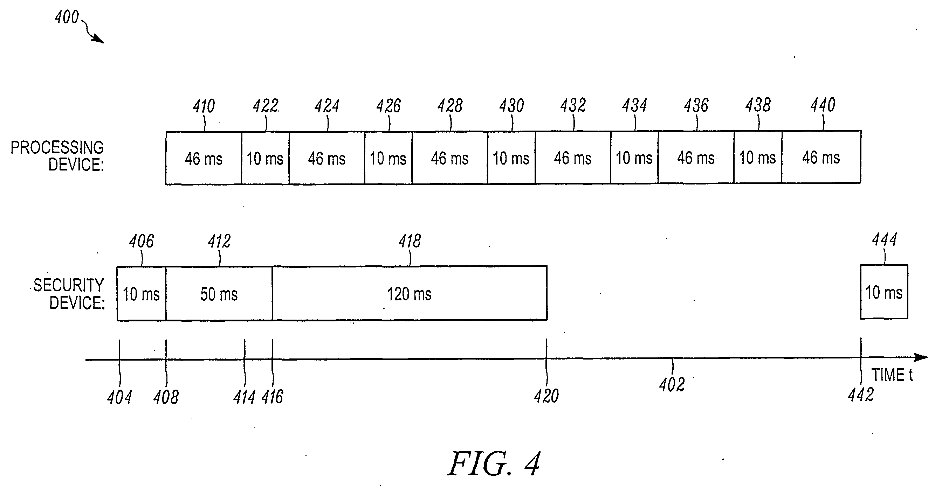

Turning now to FIG. 4, a logical timeline flowchart 400 illustrating a method in accordance with some embodiments of the present teachings is shown. A timeline 402 represents time. At time 404, a processing device in a TETRA subscriber radio requests a security device (i.e., the SIM card of the radio) to generate a keystream segment, i.e., an on-demand keystream segment, to encrypt a first TETRA frame of voice data. The security device uses a 10 ms period 406 to generate the on-demand keystream segment, and sends the on-demand keystream segment to the processing device at time 408. During a 46 ms period 410 which starts from time 408 and ends at time 414, the processing device encrypts the first TETRA frame of voice data using the on-demand keystream segment.

When the security device completes generation of the on-demand keystream segment at time 408, the security device determines that it has received a request to encrypt or decrypt a block of data, such as a text message. Accordingly, the security device generates a set of five keystream segments, i.e., in-advance keystream segments, during a 50 ms period 412. The period 412 starts from time 408 and ends at time 416. In addition, the security device stores the set of five keystream segments into a buffer, such as the buffer 106 of FIG. 1. Thereafter, the security device encrypts or decrypts the block of data during a 120 ms period 418 which ends at time 420. While the security device is encrypting or decrypting the block of data during the period 418, the processing device uses the keystream segments stored in the buffer by the security device to encrypt voice data. The five keystream segments stored in the buffer by the security device enables the processing device to encrypt five more TETRA frames of voice data during five 46 ms periods, 424, 428, 432, 436, and 440, respectively.

Because the processing device receives a TETRA frame for 56 ms, and the processing device uses about 46 ms to encrypt one TETRA frame of voice data, there is a 10 ms time hole between every two consecutive 46 ms periods. For example, a 10 ms time hole 426 is present between the two 46 ms periods, 424 and 428. Other 10 ms time holes, 422, 430, 434, and 438, are present herein.

The processing device completes encryption of the five TETRA frames of voice data at time 442, later than the time 420 when the security device completes encrypting the block of data. Since the processing device does not wait for the security device to generate on-demand keystream segments when the security device is encrypting data during the period 418, accordingly, audio holes such as the audio hole 226 of FIG. 2 are eliminated by in-advance generation of the set of five keystream segments by the security device during period 412. In other words, the processing device does not have to request and wait for an on-demand keystream segment for encrypting voice data when the security device is encrypting or decrypting the block of data. The number of in-advance keystream segments that the security device generates before encrypting or decrypting the block of data is determined by the requirement of avoiding an audio hole for the processing device. When the number is too small, an undesirable audio hole is created. For example, in the illustrative embodiment of FIG. 2, the number of in-advance keystream segments is zero, because no in-advance keystream segments are generated therein, and an undesirable audio hole 226 is created.

In the present illustrative embodiment, five in-advance keystream segments are generated by the security device during the period 412. Alternatively, a different number, such as six, of in-advance keystream segments may be generated. Alternatively, the security device may continue to generate in-advance keystream segments until the buffer storing the in-advance keystream segments is full. It should be noted that the processing device may use an in-advance keystream segment from the buffer before the buffer is full or a designated number, such as five, of keystream segments all have been generated. For example, the processing device finishes encryption of the first TETRA frame of voice data at time 414. Time 414 is 4 ms before time 416 when the security device complete generation of the five in-advance keystream segments. Accordingly, at time 414, the buffer is not full yet. However, the processing device may retrieve one keystream segment from the buffer at time 414 to encrypt the second TETRA frame of voice data during period 424.

After the processing device completes encryption of the five TETRA frames of voice data at time 442, the buffer no longer contains any keystream segments. Moreover, the security device is not encrypting data at time 442. Accordingly, the security device switches to on-demand generation of keystream segments. For example, if the processing device requests a keystream segment from the security device at time 442, the security device generates a 10 ms on-demand keystream segment 444.

Persons of skill in the art will understand that this disclosure may be extended to other embodiments than those specifically disclosed herein. In the foregoing specification, specific embodiments have been described. However, one of ordinary skill in the art appreciates that various modifications and changes can be made without departing from the scope of the disclosure as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The disclosure is defined solely by the appended claims including any amendments made during the pendency of this application and all equivalents of those claims as issued.

Moreover in this document, relational terms such as first and second, and the like may be used solely to distinguish one entity or action from another entity or action without necessarily requiring or implying any actual such relationship or order between such entities or actions. The terms "comprises," "comprising," "has," "having," includes," "including," "contains," "containing," or any other variation thereof, are intended to cover a non-exclusive inclusion, such that a process, method, article or apparatus that comprises, has, includes, contains a list of elements does not include only those elements but may include other elements not expressly listed or inherent to such process, method, article, or apparatus. An element proceeded by"comprises ...a", "has ... a", "include ... a", "contains ... a" does not, without more constraints, preclude the existence of additional identical elements in the process, method, article, or apparatus that comprises, has, includes, contains the element. The terms "a" and "an" are defined as one or more unless explicitly stated otherwise herein. A device or structure that is "configured" in a certain way is configured in at least that way, but may also be configured in ways that are not listed. Also, the sequence of steps in a flow diagram or elements in the claims, even when preceded by a letter does not imply or require that sequence.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and apparatus described herein. The non-processor circuits may include, but are not limited to, a radio receiver, a radio transmitter, signal drivers, clock circuits, power source circuits, and user input devices. As such, these functions may be interpreted as steps of a method described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used. Both the state machine and ASIC are considered herein as a "processing device" for purposes of the foregoing discussion and claim language.

Moreover, an embodiment can be implemented as a computer-readable storage medium having computer readable code stored thereon for programming a computer (e.g., comprising a processor) to perform a method as described and claimed herein. Examples of such computer-readable storage medium include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method (200) for dynamically switching a security device between on-demand and in-advance operation, the method (200) comprising:
a security device (102) that generates keystream segments and encrypts data but not simultaneously, the security device (102) performing:
generating (302) a first set of keystream segments on-demand for a processing device (104) for voice encryption,
while generating (302) the first set of keystream segments, receiving a request from the processing device (104) to encrypt or decrypt (308, 418) a block of data;
responsive to the request, generating (306) a second set of keystream segments in-advance for storing in a buffer (106);
ceasing keystream segment generation to encrypt or decrypt (308, 418) the block of data, during a time when the second set of key stream segments stored in the buffer (106) is being used by the processing device (104);
after completing the encrypting or decrypting (308, 418) of the block of data, returning to generate (302) at least one keystream segment on-demand for the processing device (104).

2. The method (200) of claim 1, wherein:
in between generating (302) each keystream segment in the first set, the security device (102) waits for a free period (420-442); and
the security device (102) generates the second set of key stream segments for storing in the buffer (106) only when the time for encrypting or decrypting (308, 418) the block of data exceeds the free period (420-442).

3. The method (200) of claim 1, wherein the keystream segments are for encrypting Terrestrial Trunked Radio voice frames.

4. A system (100) for dynamically switching a security device (102) between on-demand and in-advance operation, the system (100) comprising:
a processing device (104) coupled to a security device (102) that generates keystream segments and encrypts or decrypts (308, 418) data but not simultaneously, wherein:
the processing device (104):
receives, one at a time from the security device (102), each keystream segment in a first set of keystream segments for encrypting voice; and
sends a request to the security device (102) to encrypt or decrypt (308, 418) a block of data;
the security device (102):
generates (302) the first set of keystream segments on-demand;
while generating (302) the first set of keystream segments, receives the request to encrypt or decrypt (308, 418) the block of data;
responsive to the request, generates (306) a second set of keystream segments in-advance for storing in a buffer (106);
ceases keystream segments generation to encrypt or decrypt (308, 418) the block of data, during a time when the second set of key stream segments stored in the buffer (106) is being used by the processing device (104); and
after completing the encryption or decryption (308, 418) of the block of data, returns to generate (302) at least one keystream segment on-demand for the processing device (104).

5. The system (100) of claim 4, wherein the security device (102) comprises a Security Identity Module card.

6. The system (100) of claim 4, wherein the system (100) comprises a radio that is Terrestrial Trunked Radio (TETRA) compliant.

7. The system (100) of claim 6, wherein the keystream segments are for encrypting TETRA voice frames.

8. The system (100) of claim 4, wherein while generating (302) the first set of keystream segments, the security device (102) waits for a free time in between generating each keystream segment, and the security device (102) only generates the second set of keystream segments when (442) the free period (420-442) exceeds the amount of time to encrypt or decrypt (308, 418) the block of data.

9. A non-transient computer-readable storage element having computer readable code stored thereon for programming a computer to perform a method (200) for dynamically switching a security device (102) between on-demand and in-advance operation, the method (200) comprising the steps of:
generating (302) a first set of keystream segments on-demand for a processing device (104) for voice encryption,
while generating (302) the first set of keystream segments, receiving a request from the processing device (104) to encrypt or decrypt (308, 418) a block of data;
responsive to the request, generating (306) a second set of keystream segments in-advance for storing in a buffer (106);
ceasing keystream segment generation (102) to encrypt or decrypt (308, 418) the block of data, during a time when the second set of key stream segments stored in the buffer (106) is being used by the processing device (104);
after completing the encrypting or decrypting (308, 418) of the block of data, returning to generate (302) at least one keystream segment on-demand for the processing device (104).

## Patentansprüche

1. Verfahren (200) zur dynamischen Schaltung einer Sicherheitsvorrichtung zwischen einem On-Demand- und In-Advance-Betrieb, wobei das Verfahren (200) umfasst:
eine Sicherheitsvorrichtung (102), die, allerdings nicht gleichzeitig, Keystreamsegmente erzeugt und Daten verschlüsselt, wobei die Sicherheitsvorrichtung (102) die folgenden Schritte durchführt:
On-Demand-Erzeugung (302) eines ersten Satzes von Keystreamsegmenten für eine Verarbeitungsvorrichtung (104) zur Sprachverschlüsselung,
während einer Erzeugung (302) des ersten Satzes von Keystreamsegmenten, Empfang einer Anforderung von der Verarbeitungsvorrichtung (104), einen Block von Daten zu verschlüsseln oder zu entschlüsseln (308, 418);
in Reaktion auf die Anforderung, In-Advance-Erzeugung (306) eines zweiten Satzes von Keystreamsegmenten zur Speicherung in einen Puffer (106);
Einstellung einer Keystreamsegmenterzeugung zur Verschlüsselung oder Entschlüsselung (308, 418) des Blocks von Daten während einer Zeit, in der der zweite Satz von Keystreamsegmenten, der in dem Puffer (106) gespeichert ist, durch die Verarbeitungsvorrichtung (104) verwendet wird;
nach einem Abschluss der Verschlüsselung oder Entschlüsselung (308, 418) des Blocks von Daten, Rückkehr zur On-Demand-Erzeugung (302) mindestens eines Keystreamsegments für die Verarbeitungsvorrichtung (104).

2. Verfahren (200) gemäß Anspruch 1, wobei:
zwischen einer Erzeugung (302) eines jeden Keystreamsegments in dem ersten Satz die Sicherheitsvorrichtung (102) auf einen freien Zeitraum (420 - 442) wartet; und
die Sicherheitsvorrichtung (102) den zweiten Satz von Keystreamsegmenten zur Speicherung in den Puffer (106) nur erzeugt, wenn die Zeit zur Verschlüsselung oder Entschlüsselung (308, 418) des Blocks von Daten den freien Zeitraum (420 - 442) übersteigt.

3. Verfahren (200) gemäß Anspruch 1, wobei die Keystreamsegmente einer Verschlüsselung von Terrestrial Trunked Radio-Sprachrahmen dienen.

4. System (100) zur dynamischen Schaltung einer Sicherheitsvorrichtung (102) zwischen einem On-Demand- und In-Advance-Betrieb, wobei das System (100) umfasst:
eine Verarbeitungsvorrichtung (104), die an eine Sicherheitsvorrichtung (102) gekoppelt ist, die Keystreamsegmente erzeugt und Daten, allerdings nicht gleichzeitig, verschlüsselt oder entschlüsselt (308, 418), wobei:
die Verarbeitungsvorrichtung (104):
jedes Keystreamsegment in einem ersten Satz von Keystreamsegmenten zur Verschlüsselung von Sprache einzeln von der Sicherheitsvorrichtung (102) empfängt; und
eine Anforderung an die Sicherheitsvorrichtung (102) zur Verschlüsselung oder Entschlüsselung (308, 418) eines Blocks von Daten sendet;
die Sicherheitsvorrichtung (102):
den ersten Satz von Keystreamsegmenten on-demand erzeugt (302);
während einer Erzeugung (302) des ersten Satzes von Keystreamsegmenten, die Anforderung empfängt, den Block von Daten zu verschlüsseln oder zu entschlüsseln (308, 418);
in Reaktion auf die Anforderung, einen zweiten Satz von Keystreamsegmenten zur Speicherung in einen Puffer (106) in-advance erzeugt (306);
eine Keystreamsegmenterzeugung zur Verschlüsselung oder Entschlüsselung (308, 418) des Blocks von Daten während einer Zeit einstellt, in der der zweite Satz von Keystreamsegmenten, der in dem Puffer (106) gespeichert ist, durch die Verarbeitungsvorrichtung (104) verwendet wird; und
nach einem Abschluss der Verschlüsselung oder Entschlüsselung (308, 418) des Blocks von Daten zu einer On-Demand-Erzeugung (302) mindestens eines Keystreamsegments für die Verarbeitungsvorrichtung (104) zurückkehrt.

5. System (100) gemäß Anspruch 4, wobei die Sicherheitsvorrichtung (102) eine Sicherungsmodulkarte umfasst.

6. System (100) gemäß Anspruch 4, wobei das System (100) ein Funkgerät umfasst, das TETRA-konform ist (TETRA = Terrestrial Trunked Radio).

7. System (100) gemäß Anspruch 6, wobei die Keystreamsegmente einer Verschlüsselung von TETRA-Sprachrahmen dienen.

8. System (100) gemäß Anspruch 4, wobei, während einer Erzeugung (302) des ersten Satzes von Keystreamsegmenten, die Sicherheitsvorrichtung (102) auf einen freien Zeitraum zwischen einer Erzeugung eines jeden Keystreamsegments wartet und die Sicherheitsvorrichtung (102) den zweiten Satz von Keystreamsegmenten nur erzeugt, wenn (442) der freie Zeitraum (420 - 442) die Menge an Zeit übersteigt, die erforderlich ist, um den Block von Daten zu verschlüsseln oder zu entschlüsseln (308, 418).

9. Nichtflüchtiges computerlesbares Speicherelement, das über einen darauf gespeicherten computerlesbaren Code zur Programmierung eines Computers zur Durchführung eines Verfahrens (200) zur dynamischen Schaltung einer Sicherheitsvorrichtung (102) zwischen einem On-Demand- und In-Advance-Betrieb verfügt, wobei das Verfahren (200) die folgenden Schritte umfasst:
On-Demand-Erzeugung (302) eines ersten Satzes von Keystreamsegmenten für eine Verarbeitungsvorrichtung (104) zur Sprachverschlüsselung,
während einer Erzeugung (302) des ersten Satzes von Keystreamsegmenten Empfang einer Anforderung von der Verarbeitungsvorrichtung (104) einen Block von Daten zu verschlüsseln oder zu entschlüsseln;
in Reaktion auf die Anforderung, In-Advance-Erzeugung (306) eines zweiten Satzes von Keystreamsegmenten zur Speicherung in einen Puffer (106);
Einstellung einer Keystreamsegmenterzeugung zur Verschlüsselung oder Entschlüsselung (308, 418) des Blocks von Daten während einer Zeit, in der der zweite Satz von Keystreamsegmenten, der in dem Puffer (106) gespeichert ist, durch die Verarbeitungsvorrichtung (104) verwendet wird;
nach einem Abschluss der Verschlüsselung oder Entschlüsselung (308, 418) des Blocks von Daten, Rückkehr zur On-Demand-Erzeugung (302) mindestens eines Keystreamsegments für die Verarbeitungsvorrichtung (104).

## Revendications

1. Procédé (200) pour la commutation dynamique d'un dispositif de sécurité entre un fonctionnement à la demande et un fonctionnement à l'avance, le procédé (200) comprenant :
un dispositif de sécurité (102) qui génère des segments de flux de clé et qui crypte des données mais pas simultanément, le dispositif de sécurité (102) exécutant des étapes de :
génération (302) d'un premier ensemble de segments de flux de clé à la demande pour un dispositif de traitement (104) pour un cryptage vocal,
lors de la génération (302) du premier ensemble de segments de flux de clé, réception, en provenance du dispositif de traitement (104), d'une demande de cryptage ou de décryptage (308, 418) d'un bloc de données ;
en réponse à la demande, génération (306) d'un deuxième ensemble de segments de flux de clé à l'avance pour le stocker dans une mémoire tampon (106) ;
arrêt de la génération de segments de flux de clé pour crypter ou décrypter (308, 418) le bloc de données, pendant un temps pendant lequel le deuxième ensemble de segments de flux de clé stocké dans la mémoire tampon (106) est utilisé par le dispositif de traitement (104) ;
après l'achèvement du cryptage ou du décryptage (308, 418) du bloc de données, retour à la génération (302) d'au moins un segment de flux de clé à la demande pour le dispositif de traitement (104).

2. Procédé (200) selon la revendication 1, dans lequel :
entre les générations (302) de chaque segment de flux de clé du premier ensemble, le dispositif de sécurité (102) attend pendant une période libre (420-442) ; et
le dispositif de sécurité (102) génère le deuxième ensemble de segments de flux de clé pour le stocker dans la mémoire tampon (106) uniquement lorsque le temps du cryptage ou du décryptage (308, 418) du bloc de données excède la période libre (420-442).

3. Procédé (200) selon la revendication 1, dans lequel les segments de flux de clé sont destinés au cryptage de trames vocales selon la norme de radiocommunications terrestres à ressources partagées.

4. Système (100) pour la commutation dynamique d'un dispositif de sécurité (102) entre un fonctionnement à la demande et un fonctionnement à l'avance, le système (100) comprenant :
un dispositif de traitement (104) couplé à un dispositif de sécurité (102) qui génère des segments de flux de clé et crypte ou décrypte (308, 418) des données mais pas simultanément, dans lequel :
le dispositif de traitement (104) :
reçoit, un à la fois en provenance du dispositif de sécurité (102), chaque segment de flux de clé d'un premier ensemble de segments de flux de clé pour un cryptage vocal ; et
envoie au dispositif de sécurité (102) une demande de cryptage ou de décryptage (308, 418) d'un bloc de données :
le dispositif de sécurité (102) :
génère (302) le premier ensemble de segments de flux de clé à la demande ;
lors de la génération (302) du premier ensemble de segments de flux de clé, reçoit la demande de cryptage ou de décryptage (308, 418) du bloc de données ;
en réponse à la demande, génère (306) un deuxième ensemble de segments de flux de clé à l'avance pour le stockage dans une mémoire tampon (106) ;
arrêt de générer des segments de flux de clé pour crypter ou décrypter (308, 418) le bloc de données, pendant un temps pendant lequel le deuxième ensemble de segments de flux de clé stocké dans la mémoire tampon (106) est utilisé par le dispositif de traitement (104) ; et
après l'achèvement du cryptage ou du décryptage (308, 418) du bloc de données, retour à la génération (302) d'au moins un segment de flux de clé à la demande pour le dispositif de traitement (104).

5. Système (100) selon la revendication 4, dans lequel le dispositif de sécurité (102) comprend une carte Module d'Identité de Sécurité.

6. Système (100) selon la revendication 4, dans lequel le système (100) comprend une radio qui est compatible avec la norme de radiocommunications à ressources partagées (TETRA).

7. Système (100) selon la revendication 6, dans lequel les segments de flux de clé sont destinés au cryptage de trames vocales TETRA.

8. Système (100) selon la revendication 4, dans lequel, lors de la génération (302) du premier ensemble de segments de flux de clé, le dispositif de sécurité (102) attend pendant un temps libre entre les générations de chaque segment de flux de clé, et le dispositif de sécurité (102) ne génère le deuxième ensemble de segments de flux de clé que lorsque (442) la période libre (420-442) excède la quantité de temps nécessaire pour le cryptage ou le décryptage (308, 418) du bloc de données.

9. Elément de stockage lisible par un ordinateur, non transitoire, sur lequel est stocké un code lisible par un ordinateur pour la programmation d'un ordinateur pour l'exécution d'un procédé (200) pour la commutation dynamique d'un dispositif de sécurité (102) entre un fonctionnement à la demande et un fonctionnement à l'avance, le procédé (200) comprenant les étapes de :
génération (302) d'un premier ensemble de segments de flux de clé à la demande pour un dispositif de traitement (104) pour un cryptage vocal,
lors de la génération (302) du premier ensemble de segments de flux de clé, réception, en provenance du dispositif de traitement (104), d'une demande de cryptage ou de décryptage (308, 418) d'un bloc de données ;
en réponse à la demande, génération (306) d'un deuxième ensemble de segments de flux de clé à l'avance pour le stocker dans une mémoire tampon (106) ;
arrêt de la génération de segments de flux de clé pour crypter ou décrypter (308, 418) le bloc de données, pendant un temps pendant lequel le deuxième ensemble de segments de flux de clé stocké dans la mémoire tampon (106) est utilisé par le dispositif de traitement (104) ;
après l'achèvement du cryptage ou du décryptage (308, 418) du bloc de données, retour à la génération (302) d'au moins un segment de flux de clé à la demande pour le dispositif de traitement (104).
